# EUROPÄISCHE PATENTSCHRIFT

(11) **EP 2 710 745 B1**
(45) Veröffentlichungstag und Bekanntmachung des Hinweises auf die Patenterteilung: **20.09.2017**
(21) Anmeldenummer: 12719302.7
(22) Anmeldetag: 17.04.2012
(51) Int. Cl.: H04B 5/00

(54) **VERFAHREN UND VORRICHTUNG ZUR KOMMUNIKATION UND LEISTUNGSÜBERTRAGUNG MITTELS EINES TRANSFORMATORS**
METHOD AND APPARATUS FOR COMMUNICATION AND POWERTRANSMISSION BY MEANS OF A TRANSFORMER
PROCÉDÉ ET DISPOSITIF DE COMMUNICATION ET DE TRANSMISSION D'ÉNERGIE AU MOYEN D'UN TRANSFORMATEUR

(30) Priorität: 19.05.2011 DE 102011076135
(43) Veröffentlichungstag der Anmeldung: 26.03.2014
(73) Patentinhaber: Endress+Hauser GmbH+Co. KG, 79689 Maulburg (DE)
(72) Erfinder: MÜLLER, Alexander, 79361 Sasbach-Jechtingen (DE); URBAN, Martin, 79541 Lörrach (DE)
(74) Vertreter: Andres, Angelika Maria
(86) Internationale Anmeldenummer: PCT/EP2012/056969
(87) Internationale Veröffentlichungsnummer: WO 2012/156163

(56) Entgegenhaltungen:
- DE-B1- 2 826 536
- DE-T2- 60 212 478

## Beschreibung

Die vorliegende Erfindung betrifft ein Verfahren und eine Vorrichtung zur Kommunikation und Leistungsübertragung mittels eines Transformators, welcher zumindest eine primärseitige Spule und eine sekundärseitige Spule aufweist, welche Teil eines Schwingkreises sind, wobei der Schwingkreis primärseitig mit einer Erregerfrequenz beaufschlagt wird. Bei der Vorrichtung handelt es sich beispielsweise um ein kapazitives, konduktives, oder vibronisches Füllstandsmessgerät, insbesondere eine Schwinggabel, um einen Temperatur- und/oder Feuchtesensor oder um ein Messgerät zur Bestimmung des pH-Wertes, der Leitfähigkeit, oder der Trübung eines Mediums.

Für Feldgeräte der Prozessautomatisierung für den Einsatz in explosionsgefährdeten Bereichen ist eine Ex-sichere Ausgestaltung der Leistungs- und Datenübertragung von großer Bedeutung. Die Leistungsübertragung zwischen der Elektronikeinheit und dem Sensor eines Messgerätes erfolgt hierzu häufig über eine kapazitive oder induktive Schnittstelle. Zur Kommunikation zwischen der Primärseite und der Sekundärseite kommen oftmals Ex-sichere Optokoppler zum Einsatz. Diese sind jedoch kostenintensiv und benötigen zusätzlichen Platz im Elektronikgehäuse.

Eine Alternative zu Optokopplern stellen Modulationsverfahren für die übertragenen Signale dar. Zur Übertragung von Daten von einer Primärseite an eine Sekundärseite über eine konduktive oder induktive Schnittstelle wird meist die Frequenz des Signals moduliert. Hierzu erzeugt eine primärseitige Elektronikeinheit in Abhängigkeit davon, ob eine logische Null oder eine logische Eins zu übertragen ist, ein Signal mit einer ersten Frequenz oder mit einer zweiten Frequenz. Das Signal dient gleichzeitig der Energieübertragung. Zur Kommunikation von der Sekundärseite zur Primärseite wird beispielsweise der Strombedarf der Sekundärseite moduliert. Diese Form der Energie- und Datenübertragung ist beispielsweise in der Offenlegungsschrift DE 10 2006 051 900 A1 offenbart.

Ein weiteres Verfahren zur Kommunikation von der Sekundärseite zur Primärseite mittels Amplitudenmodulation ist beispielsweise in der Offenlegungsschrift WO2008/135402 A1 beschrieben. Das amplitudenmodulierte Signal wird von einem Klasse-E-Verstärker erzeugt. Die Amplitudenumtastung im Ausgangssignal wird hierbei dadurch erzielt, dass entweder die Ansteuerfrequenz des Klasse-E-Verstärkers variiert wird, oder dass bei konstanter Ansteuerfrequenz die Resonanzfrequenz des Verstärkers mittels einer zuschaltbaren Last verschoben wird.

Nachteilig an der Amplitudenmodulation ist die relativ hohe Störanfälligkeit gegenüber eingekoppelten Signalen.

In der DE60212478T2 ist eine auf einem Modulationsverfahren beruhende Vorrichtung zur Übertragung von periodischen Signalen mit zwei Zuständen offenbart worden. Die Vorrichtung enthält einen Kondensator, ein eine Sendeantenne bildendendes induktives Mittel mit einer primäre und eine sekundäre Induktivität, und einen Schalter, welcher Schalter derart angeordnet, dass sich die primäre Induktivität im geschlossenen Zustand des Schalters in einer Schaltung mit erzwungener Schwingung befindet. Ist der Schalter dagegen offen, so befinden sich die primäre und sekundäre Induktivität in einer frei schwingenden Schaltung.

Zur erdfreien Übertragung von Signalen über Trennstellen ist eine weitere Schaltungsanordnung aus der DE2826536B1 bekannt geworden, welche einen mit einem Hochfrequenzgenerator galvanisch getrennt gekoppelten Resonanzschwingkreis aufweist, welcher mit einer mit dem Eingang der Trennstelle verbundenen Modulationsschaltung verbunden, und mit einer auf der Sekundärseite der Trennstelle vorgesehenen Demodulationsschaltung induktiv gekoppelt ist. Die Signalübertragung erfolgt mit Hilfe von auf der Primärseite der Trennstelle signalgesteuerten hochfrequenten Schwingungen, welche auf der Sekundärseite der Trennstelle durch Gleichrichtung zur Wiedergabe der Signale auswertbar sind, wobei eine Gleichspannung zur Kompensation des der Amplitude der modulierten hochfrequenten Spannung entsprechenden Gleichspannungsanteils der modulierten Signale erzeugbar ist.

Die Aufgabe der Erfindung besteht darin, eine Vorrichtung und ein Verfahren für eine störunanfällige Datenübertragung über eine induktive Schnittstelle bereit zu stellen.

Die Aufgabe wird von einem Verfahren dadurch gelöst, dass eine Energie- und Signalübertragung von der Primärseite zur Sekundärseite, sowie eine Signalübertragung von der Sekundärseite zur Primärseite über den Transformator erfolgt, und dass zur Übertragung eines Signals von der Sekundärseite an die Primärseite eine Induktivität der sekundärseitigen Spule moduliert wird.
Primärseitig wird eine sich durch die Modulation der Sekundärinduktivität ergebende Frequenzänderung ausgewertet. Sekundärseitig ist einer logischen Null oder einer logischen Eins jeweils ein Induktivitätswert zugeordnet, welcher entsprechend der zu übertragenden Information eingestellt wird. Primärseitig ist der sich in Abhängigkeit der jeweiligen Induktivität einstellenden Resonanzfrequenz wieder die entsprechende Binärziffer zugeordnet.
Das Verfahren zur Signalübertragung von der Sekundärseite zur Primärseite stellt eine indirekte Frequenzmodulation dar. Indirekt, da die Frequenz nicht aktiv auf der Sekundärseite gesteuert wird, sondern sekundärseitig eine Kenngröße des Schwingkreises verändert wird, was eine primärseitig detektierbare Frequenzänderung hervorruft. Diese Lösung ermöglicht eine Signalübertragung mit hohem Wirkungsgrad. Energie und Information werden über dieselbe Schnittstelle übertragen.
Die Bestimmung des Wirkungsgrades kann weiterhin zu Diagnosezwecken dienen. Ist der Wirkungsgrad geringer als erwartet, oder entspricht die Resonanzfrequenz nicht der erwarteten Resonanzfrequenz, tritt an irgendeiner Stelle ein Leistungsverlust auf. Ausgehend von der Auswertung des Wirkungsgrades kann ein Warnsignal an das Bedienpersonal erzeugt werden, sodass beispielsweise eine Wartung initiiert werden kann.

In einer ersten Ausgestaltung der erfindungsgemäßen Lösung wird die Induktivität durch Änderung der Windungszahl der sekundärseitigen Spule moduliert.

Gemäß einer Ausgestaltung des Verfahrens wird zur primärseitigen Auswertung des Signals eine durch die Modulation der Induktivität hervorgerufene Modulation der Resonanzfrequenz des Schwingkreises detektiert.

Eine hiermit verbundene Ausgestaltung beinhaltet, dass die Resonanzfrequenz des Schwingkreises und/oder eine Änderung der Resonanzfrequenz des Schwingkreises aus der Amplitude und/oder dem Wirkungsgrad des Transformators bestimmt werden/wird.

In einer vorteilhaften Ausgestaltung des Verfahrens wird zur Übertragung eines zweiten Signals von der Primärseite zur Sekundärseite die Erregerfrequenz moduliert. Die Frequenzmodulation stellt ein sehr störsicheres Kommunikationsverfahren dar.

Eine weitere Ausgestaltung sieht vor, dass der Sekundärseite Kommunikationsphasen zugeteilt werden, während welcher nur die Sekundärseite Daten überträgt, und dass der Schwingkreis während der Kommunikationsphasen mit der Resonanzfrequenz angeregt wird.

In einer Weiterbildung wird die Erregerfrequenz während der Kommunikationsphase von der Sekundäreinheit zur Primäreinheit derart geregelt, dass die Erregerfrequenz auch bei einer Änderung der Sekundärinduktivität stets der Resonanzfrequenz des Schwingkreises entspricht.

Gemäß einer Weiterbildung wird die Modulation der Induktivität der sekundärseitigen Spule an Hand einer Nachregelung der Erregerfrequenz erkannt und ausgewertet.

In einer Ausgestaltung des Verfahrens kommuniziert die Sekundärseite unabhängig davon, mit welcher Erregerfrequenz der Schwingkreis angeregt wird, mit der Primärseite. Mit anderen Worten ist die Sekundärseite nicht an ihr zugeteilte Kommunikationsphasen gebunden, sondern kann jederzeit mit der Primärseite kommunizieren.
Eine Ausgestaltung der Erfindung beinhaltet, dass mittels der Modulation der Sekundärinduktivität eine Frequenzumtastung realisiert wird.
Die Aufgabe wird weiterhin gelöst von einer Vorrichtung zur Kommunikation und Leistungsübertragung mittels eines Transformators, welcher eine primärseitige Spule und eine sekundärseitige Spule aufweist, welche Teil eines Schwingkreises sind, mit einer primärseitigen Logikeinheit, welche den Schwingkreis mit einer Erregerfrequenz beaufschlagt, und mit einer sekundärseitigen Logikeinheit, wobei eine Energie- und Signalübertragung von der Primärseite zur Sekundärseite, sowie eine Signalübertragung von der Sekundärseite zur Primärseite über den Transformator erfolgt, und wobei die sekundärseitige Logikeinheit zur Übertragung eines Signals von der Sekundärseite an die Primärseite eine Induktivität der sekundärseitigen Spule moduliert.
Gemäß einer vorteilhaften Ausgestaltung der Vorrichtung weist die sekundärseitige Spule mindestens einen zu- und wegschaltbaren Spulenabschnitt auf und die sekundärseitige Logikeinheit moduliert die Induktivität durch Zu- und Wegschalten des Spulenabschnittes.
Die primärseitige Logikeinheit regelt die Anregungsfrequenz des Schwingkreises und führt die Anregungsfrequenz derart nach, dass sie stets der Resonanzfrequenz entspricht, auch wenn sich die Resonanzfrequenz auf Grund einer Änderung der Sekundärinduktivität ändert. Hierdurch ist die Leistungsübertragung optimiert.
Eine derartige Vorrichtung findet beispielsweise in einem Feldgerät der Prozessautomatisierung Anwendung. Als Feldgeräte werden alle Typen von Messgeräten und Aktoren bezeichnet. Messgeräte dienen der Erfassung von Prozessgrößen, wie beispielsweise Füllstandsmessgeräte, Durchflussmessgeräte, Druck- und Temperaturmessgeräte, pH-Messgeräte, Leitfähigkeitsmessgeräte, usw., welche die entsprechenden Prozessgrößen Füllstand, Durchfluss, Druck, Temperatur, pH-Wert bzw. Leitfähigkeit erfassen. Zur Beeinflussung der Prozessgrößen werden Aktoren verwendet, wie Ventile oder Pumpen, über die z.B. der Durchfluss einer Flüssigkeit in einer Rohrleitung oder der Füllstand eines Mediums in einem Behälter geändert wird. Prinzipiell ist die Vorrichtung jedoch überall dort einsetzbar, wo Energie und Information über einen Transformator übertragen werden.

Die Erfindung wird bezüglich des Verfahrens und der Vorrichtung zur Durchführung des Verfahrens anhand der nachfolgenden Figuren gemeinsam näher erläutert. Gleiche Teile sind in den Figuren mit gleichen Bezugszeichen gekennzeichnet.
- Fig. 1: zeigt ein Blockschaltbild einer Vorrichtung mit induktiver Schnittstelle;
- Fig. 2a: illustriert einen ersten Zustand der Vorrichtung während der Kommunikation;
- Fig. 2b: illustriert den zweiten Zustand der Vorrichtung während der Kommunikation.

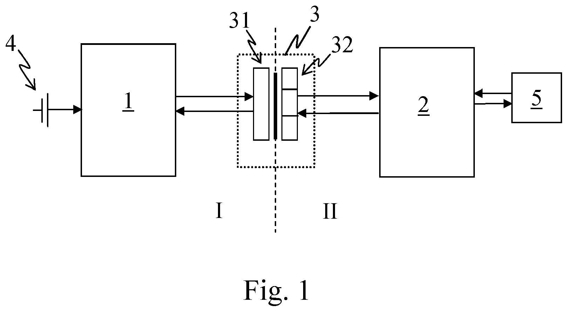

Fig. 1 zeigt ein schematisches Blockschaltbild einer Vorrichtung zur Kommunikation und Leistungsübertragung mittels eines Transformators 3. Der Transformator 3 bildet die Schnittstelle zwischen einer Primärseite I und einer Sekundärseite II. Die Primärseite I zeichnet sich durch das Vorhandensein einer Spannungsquelle 4 aus. Die Sekundärseite II weist keine Energiequelle auf, sondern wird von der Primärseite I mit Energie versorgt. Der Verbraucher 5 auf der Sekundärseite II ist beispielsweise ein Sensor zur Bestimmung und/oder Überwachung einer oder mehrerer Prozessgrößen. Primärseite I und Sekundärseite II besitzen jeweils eine Logikeinheit 1, 2, welche unter anderem die Kommunikation über den Transformator 3 steuert. Über den Transformator 3, welcher im Wesentlichen aus einer primärseitigen Spule 31 und einer sekundärseitigen Spule 32 aufgebaut ist, erfolgt die Energie- und Signalübertragung von der Primärseite I zur Sekundärseite II, sowie die Signalübertragung von der Sekundärseite II zur Primärseite I. Der Transformator 3 kann daher auch als Übertrager bezeichnet werden. Um eine ausreichende Energieversorgung der Komponenten der Sekundärseite II, sowie eine hohe Effizienz der Vorrichtung zu gewährleisten, erfolgt die Signalübertragung mittels Verfahren, welche einen hohen Wirkungsgrad besitzen.

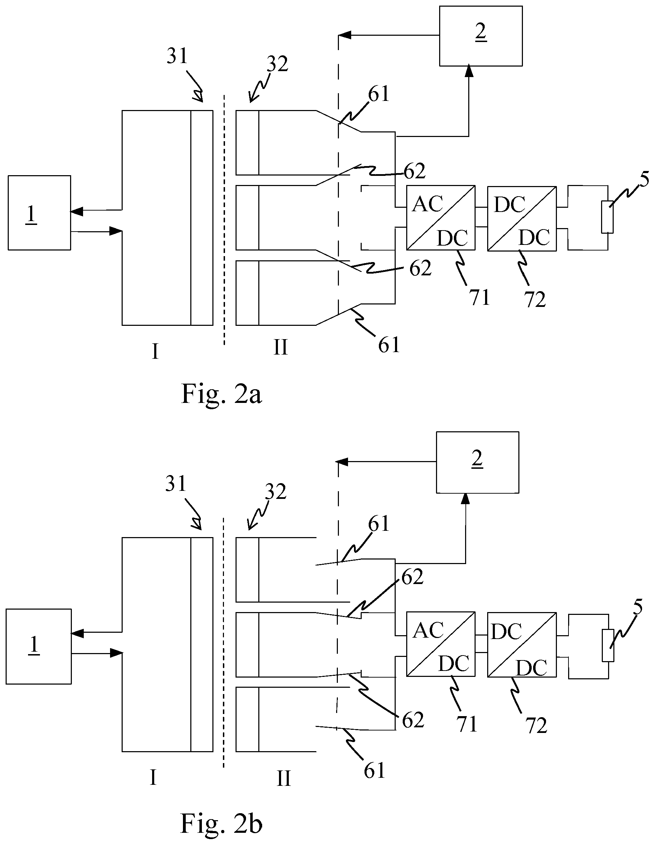

In Fig. 2a und Fig. 2b ist jeweils der Zustand der Vorrichtung bei der Übertragung einer logischen Null bzw. einer logischen Eins von der Sekundärseite II zur Primärseite I dargestellt. Beispielsweise entspricht der in Fig. 2a dargestellte Zustand dem Grundzustand oder der Übertragung einer logischen Null und der in Fig. 2b dargestellte Zustand der Übertragung einer logischen Eins. Die umgekehrte Zuordnung ist jedoch ebenfalls möglich. Weiterhin kann der Grundzustand an Stelle der logischen Null der logischen Eins zugeordnet sein.

Die primärseitige Spule 31 und die sekundärseitige Spule 32 sind Teil eines Schwingkreises, dessen Resonanzfrequenz im Wesentlichen durch die Induktivitäten der beiden Spulen 31, 32 vorgegeben ist. Die Einstellung der Anregungsfrequenz des Schwingkreises erfolgt über die primärseitige Elektronikeinheit 1.

Die sekundärseitige Spule 32 weist eine Dreiteilung auf. Sind die beiden inneren Schaltelemente 62 wie in Fig. 2a offen, sind die drei Teile miteinander verbunden. Die Induktivität der sekundärseitigen Spule 32 ist dann durch die Windungszahlen aller drei Teile bestimmt. Die beiden äußeren Schaltelemente 61 verbinden die sekundärseitige Spule 32 mit einem Gleichrichter 71, welcher die übertragene Wechselspannung in eine Gleichspannung umwandelt. Der Gleichrichter 71 wiederum ist mit einem Gleichspannungswandler 72 verbunden, welcher den Verbraucher 5 mit einer konstanten Spannung versorgt. Der Verbraucher 5, bei welchem es sich beispielsweise um ein Sensorelement handelt, ist schematisch als Lastwiderstand dargestellt.

In Fig. 2b sind die beiden äußeren Schaltelemente 61 offen. Die beiden inneren Schaltelemente 62 sind geschlossen, d.h. sie verbinden den mittleren Teil der sekundärseitigen Spule 32 mit dem Gleichrichter 71. Die Induktivität der sekundärseitigen Spule 32 ist in diesem Zustand durch die Windungszahl des mittleren Teils bestimmt. Weitere Parameter, welche die Induktivität beeinflussen, sind konstant.

Gesteuert werden die Schaltelemente 61, 62 von der sekundärseitigen Elektronikeinheit 2. Diese entschlüsselt auch die von der Primärseite I an die Sekundärseite II übertragenen Signale und wertet die übertragene Information aus.

Die Kommunikation von der Primärseite I zur Sekundärseite II wird vorzugsweise mittels einer Frequenzmodulation durchgeführt. Frequenzmodulationsverfahren ermöglichen eine energieeffiziente Datenübertragung. Die beiden Frequenzen, welche das zu übertragende Signal kodieren, sind bevorzugt so gewählt, dass sie jeweils um einen geringen Betrag von der Resonanzfrequenz des Schwingkreises und somit der Frequenz, bei welcher die maximale Leistungsübertragung möglich ist, abweichen. Die erste Frequenz ist beispielsweise geringfügig geringer und die zweite Frequenz um denselben Betrag geringfügig größer als die Resonanzfrequenz des Übertragers. Unter geringfügig ist zu verstehen, dass die Frequenzen nur so weit von der Resonanzfrequenz abweichen, dass die beiden Frequenzen sicher voneinander und von der Resonanzfrequenz unterscheidbar sind, sodass die bei der jeweiligen Frequenz übertragene Leistung dennoch mit einem hohen Wirkungsgrad übertragen wird. Die Codierung der zu übertragenden Daten in entsprechende Frequenzen übernimmt die primärseitige Logikeinheit 1. Alternativ zur Frequenzmodulation erfolgt die Kommunikation von der Primärseite I zur Sekundärseite II mittels Amplitudenmodulation.

Zur Kommunikation von der Sekundärseite II zur Primärseite I wird erfindungsgemäß die Sekundärinduktivität moduliert. In der sekundärseitigen Elektronikeinheit 2 ist eine Zuordnung zwischen den zu übertragenden Binärziffern und der entsprechenden Stellung der Schaltelemente 61, 62 hinterlegt. Mittels des von der sekundärseitigen Elektronikeinheit 2 gesteuerten Zu- und Wegschaltens von Windungen der sekundärseitigen Spule 32 wird die Induktivität und somit die Resonanzfrequenz des Übertragers verändert. Eine solche Änderung ist auf der Primärseite I detektierbar, beispielsweise indem die Resonanzfrequenz des Schwingkreises gemessen wird, oder indem eine automatische Nachregelung des Schwingkreises auf die Resonanzfrequenz ausgewertet wird.

Die Kommunikation von der Sekundärseite II zur Primärseite I mittels Modulation der Sekundärinduktivität ist nicht nur störsicher, sondern erfolgt darüber hinaus mit einem hohen Wirkungsgrad. Ein Gerät, insbesondere ein Messgerät, in welchem die Modulation der Sekundärinduktivität gemeinsam mit einem ebenfalls einen hohen Wirkungsgrad aufweisenden Verfahren für die Datenübertragung von der Primärseite I zur Sekundärseite II implementiert ist, besitzt daher den Vorteil mit einer geringen Versorgungsspannung betrieben werden zu können.

Vorzugsweise erfolgen die Datenübertragung zu der Sekundärseite II und die Datenübertragung von der Sekundärseite II aus nicht gleichzeitig, sondern es sind bestimmte Zeitabschnitte für die Kommunikation von der Sekundärseite II zur Primärseite I reserviert. Diese Zeitabschnitte können beispielsweise periodisch vorgegeben sein, wobei deren zeitlicher Abstand zueinander und deren Länge an die jeweilige Anwendung anpassbar sind. Während dieser Zeitabschnitte erzeugt die Primärseite I ein Signal mit einer Frequenz, welche zu den zur Kommunikation verwendeten Frequenzen unterschiedlich ist. Vorzugsweise wird das Signal mit der Resonanzfrequenz erzeugt, sodass während dieser Zeitabschnitte eine maximale Leistung an die Sekundärseite II übertragen wird.

Zur Dekodierung des Signals auf der Primärseite I wird in einer Ausgestaltung die Resonanzfrequenz des Schwingkreises bestimmt und ausgewertet. Die Resonanzfrequenz ist eindeutig einer Induktivität und somit der zu übermittelnden Information zugeordnet. Zur Auswertung des Kommunikationssignals ist in der primärseitigen Logikeinheit 1 eine Zuordnung der beiden auftretenden Resonanzfrequenzen zu der jeweiligen Binärziffer, welche sie repräsentiert, hinterlegt.

In einer alternativen Ausgestaltung wird zusätzlich oder alternativ zur Resonanzfrequenz selbst eine Änderung der Resonanzfrequenz detektiert und ausgewertet. Beispielsweise ist eine Resonanzfrequenz definiert, bei welcher die Kommunikation von der Sekundärseite II zur Primärseite I erfolgt. Diese ist einer Binärziffer zugeordnet. Eine Erhöhung oder Verminderung dieser voreingestellten Resonanzfrequenz wird entsprechend mit der komplementären Binärziffer assoziiert.

Eine Änderung der Resonanzfrequenz ist beispielsweise über eine Änderung des Wirkungsgrades der Leistungsübertragung detektierbar. Die Bestimmung des Wirkungsgrades bietet darüber hinaus die Möglichkeit der Überwachung der Schnittstelle. Fällt der Wirkungsgrad unerwartet stark ab, ist dies ein Hinweis auf das Auftreten eines Fehlers und ein Alarmsignal zur Wartung des Gerätes kann erzeugt werden. Insbesondere bei Prozessmessgeräten ist die zeitnahe Fehlererkennung von hoher Wichtigkeit, da das Versagen eines Prozessmessgerätes schwerwiegende Folgen haben kann, beispielsweise falls nachfolgende Ventile oder Pumpen ausgehend von dessen Messung gesteuert werden.
In einer Ausgestaltung wird die Anregungsfrequenz des Schwingkreises bei einer Änderung der Resonanzfrequenz derart nachgeführt, dass die aktuelle Schwingfrequenz des Schwingkreises wieder der Resonanzfrequenz entspricht. An Hand der Änderung der Resonanzfrequenz ist das von der Sekundärseite II übermittelte Signal dekodierbar.

### Bezugszeichenliste

- 1: Primärseitige Logikeinheit
- 2: Sekundärseitige Logikeinheit
- 3: Transformator
- 31: Primärseitige Spule
- 32: Sekundärseitige Spule
- 4: Spannungsquelle
- 5: Verbraucher
- 61: Äußeres Schaltelement
- 62: Inneres Schaltelement
- 71: Gleichrichter
- 72: Gleichspannungswandler
- I: Primärseite
- II: Sekundärseite

## Patentansprüche

1. Verfahren zur Kommunikation und Leistungsübertragung mittels eines Transformators (3), welcher zumindest eine primärseitige Spule (31) und eine sekundärseitige Spule (32) aufweist, welche Teil eines Schwingkreises sind, wobei der Schwingkreis primärseitig mit einer Erregerfrequenz beaufschlagt wird,
**dadurch gekennzeichnet,**
**dass** eine Energie- und Signalübertragung von der Primärseite (I) zur Sekundärseite (II), sowie eine Signalübertragung von der Sekundärseite (II) zur Primärseite (I) über den Transformator (3) erfolgt, und dass zur Übertragung eines Signals von der Sekundärseite (II) an die Primärseite (I) eine Induktivität der sekundärseitigen Spule (32) moduliert wird.

2. Verfahren nach Anspruch 1,
**dadurch gekennzeichnet,**
**dass** die Induktivität durch Änderung der Windungszahl der sekundärseitigen Spule (32) moduliert wird.

3. Verfahren nach Anspruch 1 oder 2,
**dadurch gekennzeichnet,**
**dass** zur primärseitigen Auswertung des Signals eine durch die Modulation der Induktivität hervorgerufene Modulation der Resonanzfrequenz des Schwingkreises detektiert wird.

4. Verfahren nach Anspruch 3,
**dadurch gekennzeichnet,**
**dass** die Resonanzfrequenz des Schwingkreises und/oder eine Änderung der Resonanzfrequenz des Schwingkreises aus der Amplitude und/oder dem Wirkungsgrad des Transformators (3) bestimmt wird.

5. Verfahren nach einem der vorangehenden Ansprüche,
**dadurch gekennzeichnet,**
**dass** zur Übertragung eines zweiten Signals von der Primärseite (I) zur Sekundärseite (II) die Erregerfrequenz moduliert wird.

6. Verfahren nach einem der vorangehenden Ansprüche,
**dadurch gekennzeichnet,**
**dass** der Sekundärseite (II) Kommunikationsphasen zugeteilt werden, während welcher nur die Sekundärseite (II) Daten überträgt,
und
**dass** der Schwingkreis während der Kommunikationsphasen mit der Resonanzfrequenz angeregt wird.

7. Verfahren nach Anspruch 6,
**dadurch gekennzeichnet,**
**dass** die Erregerfrequenz während der Kommunikationsphase von der Sekundärseite (II) zur Primärseite (I) derart geregelt wird, dass die Erregerfrequenz auch bei einer Änderung der Sekundärinduktivität stets der Resonanzfrequenz des Schwingkreises entspricht.

8. Verfahren nach Anspruch 7,
**dadurch gekennzeichnet,**
**dass** die Modulation der Induktivität der sekundärseitigen Spule (32) anhand einer Nachregelung der Erregerfrequenz erkannt und ausgewertet wird.

9. Verfahren nach einem der Ansprüche 1 bis 5,
**dadurch gekennzeichnet,**
**dass** die Sekundärseite (II) unabhängig davon, mit welcher Erregerfrequenz der Schwingkreis angeregt wird, mit der Primärseite (I) kommuniziert.

10. Verfahren nach einem der vorangehenden Ansprüche,
**dadurch gekennzeichnet,**
**dass** mittels der Modulation der Sekundärinduktivität eine Frequenzumtastung realisiert wird.

11. Vorrichtung zur Kommunikation und Leistungsübertragung mittels eines Transformators (3), welcher eine primärseitige Spule (31) und eine sekundärseitige Spule (32) aufweist, welche Teil eines Schwingkreises sind, mit einer primärseitigen Logikeinheit (1), welche den Schwingkreis mit einer Erregerfrequenz beaufschlagt, und mit einer sekundärseitigen Logikeinheit (2),
**dadurch gekennzeichnet,**
**dass** eine Energie- und Signalübertragung von der Primärseite (I) zur Sekundärseite (II), sowie eine Signalübertragung von der Sekundärseite (II) zur Primärseite (I) über den Transformator (3) erfolgt, und dass die sekundärseitige Logikeinheit (2) zur Übertragung eines Signals von der Sekundärseite (II) an die Primärseite (I) eine Induktivität der sekundärseitigen Spule (32) moduliert.

12. Vorrichtung nach Anspruch 11,
**dadurch gekennzeichnet,**
**dass** die sekundärseitige Spule (32) mindestens einen zu- und wegschaltbaren Spulenabschnitt aufweist, und dass die sekundärseitige Logikeinheit (2) die Induktivität durch Zu- und Wegschalten des Spulenabschnittes moduliert.

## Claims

1. Procedure designed for communication and power transfer using a transformer (3), which has at least a coil (31) on the primary side and a coil (32) on the secondary side, which form part of an oscillating circuit, wherein the oscillating circuit is exposed to an excitation frequency on the primary side,
**characterized in that**
energy and signal transmission take place from the primary side (I) to the secondary side (II), and signal transmission takes place from the secondary side (II) to the primary side (I) via the transformer (3), and **in that** an inductance of the secondary coil (32) is modulated for the transmission of a signal from the secondary side (II) to the primary side (I).

2. Procedure as claimed in Claim 1,
**characterized in that**
the inductance is modulated by changing the number of windings of the coil (32) on the secondary side.

3. Procedure as claimed in Claim 1 or 2,
**characterized in that**
a modulation of the resonance frequency of the oscillating circuit, which is caused by the modulation of the inductance, is detected for the evaluation of the signal on the primary side.

4. Procedure as claimed in Claim 3,
**characterized in that**
the resonance frequency of the oscillating circuit and/or a change in the resonance frequency of the oscillating circuit is determined from the amplitude and/or the level of effectiveness of the transformer (3).

5. Procedure as claimed in one of the previous claims,
**characterized in that**
the excitation frequency is modulated to transmit a second signal from the primary side (I) to the secondary side (II).

6. Procedure as claimed in one of the previous claims,
**characterized in that**
communication phases are allocated to the secondary side (II), during said phases only the secondary side (II) transmits data,
and
**in that** the oscillating circuit is excited with the resonance frequency during the communication phases.

7. Procedure as claimed in Claim 6,
**characterized in that**
during the communication phase from the secondary side (II) to the primary side (I) the excitation frequency is regulated in such a way that the excitation frequency always corresponds to the resonance frequency of the oscillating circuit even in the event of a change in the secondary inductance.

8. Procedure as claimed in Claim 7,
**characterized in that**
the modulation of the inductance of the coil on the secondary side (32) is detected and evaluated using a readjustment of the excitation frequency.

9. Procedure as claimed in Claims 1 to 5,
**characterized in that**
the secondary side (II) communicates with the primary side (I) irrespective of the excitation frequency at which the oscillating circuit is excited.

10. Procedure as claimed in one of the previous claims,
**characterized in that**
frequency shift keying takes place by means of the modulation of the secondary inductance.

11. Apparatus designed for communication and power transfer using a transformer (3), which has a coil (31) on the primary side and a coil (32) on the secondary side, which form part of an oscillating circuit, with a logic unit (1) on the primary side, which subjects the oscillating circuit to an excitation frequency, and with a logic unit (2) on the secondary side,
**characterized in that**
energy and signal transmission take place from the primary side (I) to the secondary side (II), and signal transmission takes place from the secondary side (II) to the primary side (I) via the transformer (3), and
**in that** the logic unit (2) on the secondary side modulates an inductance of the coil (32) on the secondary side for the transmission of a signal from the secondary side (II) to the primary side (I).

12. Apparatus as claimed in Claim 11,
**characterized in that**
the coil (32) on the secondary side has at least one coil section that can be connected and disconnected,
and **in that** the logic unit (2) on the secondary side modulates the inductance by connecting and disconnecting the coil section.

## Revendications

1. Procédé destiné à la communication et à la transmission de puissance au moyen d'un transformateur (3), lequel comporte une bobine côté primaire (31) et une bobine côté secondaire (32), lesquelles font partie d'un circuit oscillant, le circuit oscillant étant soumis côté primaire à une fréquence d'excitation,
**caractérisé**
**en ce que** sont effectuées une transmission d'énergie et de signal du côté primaire (I) vers le côté secondaire (II), ainsi qu'une transmission de signal du côté secondaire (II) vers le côté primaire (I) par l'intermédiaire du transformateur (3), et en ce qu'une inductance de la bobine côté secondaire (32) est modulée pour la transmission d'un signal du côté secondaire (II) au côté primaire (I).

2. Procédé selon la revendication 1,
**caractérisé**
**en ce que** l'inductance est modulée par la variation du nombre de spires de la bobine côté secondaire (32).

3. Procédé selon la revendication 1 ou 2,
**caractérisé**
**en ce qu'**est détectée, pour l'évaluation côté primaire du signal, une modulation de la fréquence de résonance du circuit oscillant générée par la modulation de l'inductance.

4. Procédé selon la revendication 3,
**caractérisé**
**en ce que** la fréquence de résonance du circuit oscillant et/ou un changement de la fréquence de résonance du circuit oscillant sont déterminés à partir de l'amplitude et/ou du rendement du transformateur (3).

5. Procédé selon l'une des revendications précédentes,
**caractérisé**
**en ce que** la fréquence d'excitation est modulée pour la transmission d'un deuxième signal du côté primaire (I) vers le côté secondaire (II).

6. Procédé selon l'une des revendications précédentes,
**caractérisé**
**en ce que** sont attribuées au côté secondaire (II) des phases de communication, pendant lesquelles seul le côté secondaire (II) transmet des données,
et
**en ce que** le circuit oscillant est excité pendant les phases de communication avec la fréquence de résonance.

7. Procédé selon la revendication 6,
**caractérisé**
**en ce que** la fréquence d'excitation est réglée pendant la phase de communication du côté secondaire (II) vers le côté primaire (I) de telle sorte que la fréquence d'excitation corresponde toujours à la fréquence de résonance, même en cas de changement de l'inductance secondaire.

8. Procédé selon la revendication 7,
**caractérisé**
**en ce que** la modulation de l'inductance de la bobine secondaire (32) est détectée et évaluée au moyen d'un réajustage de la fréquence d'excitation.

9. Procédé selon l'une des revendications 1 à 5,
**caractérisé**
**en ce que** le côté secondaire (II) communique avec le côté primaire (I) indépendamment de la fréquence d'excitation avec laquelle le circuit oscillant est excité.

10. Procédé selon l'une des revendications précédentes,
**caractérisé**
**en ce qu'**est réalisée une modulation par déplacement de fréquence au moyen de la modulation de l'inductance secondaire.

11. Dispositif destiné à la communication et à la transmission de puissance au moyen d'un transformateur (3), lequel comporte une bobine côté primaire (31) et une bobine côté secondaire (32), lesquelles font partie d'un circuit oscillant,
avec une unité logique côté primaire (1), qui soumet le circuit oscillant à une fréquence d'excitation, et avec une unité logique côté secondaire (2),
**caractérisé**
**en ce qu'**une transmission d'énergie et de signal du côté primaire (I) vers le côté secondaire (II), ainsi qu'une transmission de signal du côté secondaire (II) vers le côté primaire (I) s'effectuent par l'intermédiaire du transformateur (3), et
**en ce que** l'unité logique côté secondaire (2) module une inductance de la bobine côté secondaire (32) pour la transmission d'un signal du côté secondaire (II) au côté primaire (I).

12. Dispositif selon la revendication 11,
**caractérisé**
**en ce que** la bobine côté secondaire (32) présente au moins une partie de bobine pouvant être mise en et hors circuit,
et **en ce que** l'unité logique côté secondaire (2) module l'inductance par la mise en et hors circuit de la partie de bobine.
